# EUROPÄISCHE PATENTSCHRIFT

(11) **EP 4 256 954 B1**
(45) Veröffentlichungstag und Bekanntmachung des Hinweises auf die Patenterteilung: **19.11.2025**
(21) Anmeldenummer: 22167182.9
(22) Anmeldetag: 07.04.2022
(51) Int. Cl.: A01K 3/00, A01K 1/00

(54) **GEHEGE FÜR NUTZTIERE**
ENCLOSURE FOR LIVESTOCK
ENCLOS POUR ANIMAUX D'ÉLEVAGE

(43) Veröffentlichungstag der Anmeldung: 11.10.2023
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patent- und Rechtsanwälte PartmbB

(56) Entgegenhaltungen:
- EP-A2- 1 138 196
- US-A1- 2009 000 564
- US-A1- 2011 120 384
- US-A1- 2020 305 386
- US-B1- 7 350 480

## Beschreibung

Die Erfindung betrifft ein Gehege zur Abgrenzung eines Laufbereiches für Nutztiere mit einer Verbindungswand zur Herstellung einer Verbindung zu einem weiteren Gehege, eine Verbindungswand für ein Gehege, ein System bestehend aus mehreren Gehegen und ein Verfahren zur Nachrüstung von mit Seitenwänden zur Begrenzung eines Laufbereiches ausgestatteten Gehegen für Nutztiere mit einer erfindungsgemäßen Verbindungswand.

Gattungsgemäße Gehege werden zum Beispiel in der Kälberzucht verwendet. Neugeborene Kälber werden üblicherweise in den ersten Lebenswochen isoliert, um die Tiere vor Infektionen zu schützen und um eine optimale Betreuung und Fütterung der Tiere zu ermöglichen. Dazu werden die Jungtiere in den ersten Wochen in separaten Gehegen der gattungsgemäßen Art gehalten, wobei häufig mobile Gehege zum Einsatz kommen, die einfach zu reinigen sind und je nach Bedarf schnell auf- oder abgebaut oder bewegt werden können. In dieser isolierten Haltung können die Kälber gut überwacht und bedarfsgerecht gefüttert werden.

Häufig werden die Jungtiere einzeln gehalten, um eine individuell abgestimmte Betreuung der Tiere zu ermöglichen und das Risiko der Übertragung von Krankheiten zu verringern. Es besteht allerdings inzwischen der Wunsch, die Jungtiere zur Förderung eines sozialen Anschlusses an Artgenossen auch bereits in den ersten Lebenswochen zumindest zeitweise in Gruppen von zwei oder mehr als zwei Tieren zu halten.

Aus DE 102016105990 A1 ist eine Behausung für Kälber bekannt, umfassend einen Aufenthaltsraum mit Seitenwänden. Der Aufenthaltsraum kann mit Zwischenwänden in verschiedene Abteile unterteilt werden, wobei die Zwischenwände aus der Behausung gezogen werden können. Anschließend können die Zwischenwände noch weiter herausgezogen werden, sodass sie schließlich völlig von der Behausung gelöst werden. Dadurch entsteht ein großer Aufenthaltsraum für alle in den Abteilen lebenden Tiere. Allerdings behindern die herausgezogenen Zwischenwände die Mitarbeiter außerhalb der Behausung, welche sich um die Tiere kümmern. Und wenn die Zwischenwände ganz herausgezogen werden, müssen sie an einem Ort aufbewahrt werden, ohne dass sie umfallen oder anderweitig stören. Wenn die Zwischenwände wieder eingesetzt werden, muss zudem die Zwischenwand exakt in die jeweilige Öffnung eingefügt werden, was immer auch Zeit in Anspruch nimmt.

CH 714333 A2 schlägt vor, eine mobile Kälberbox für Kälber bereitzustellen, die zwei von einer Zwischenwand getrennte Bereiche aufweist. Mit einer verschließbaren Öffnung in der Zwischenwand können die zwei Bereiche der Kälberbox miteinander verbunden bzw. voneinander getrennt werden, um sozialen Kontakt zwischen den in den Bereichen der Kälberbox gehaltenen Tieren zu ermöglichen.

Aus US 20200305386 A1 ist ein an einer Wand eines Viehanhängers angeordnetes entfaltbares Gehegesystem bekannt. Das Gehege umfasst ein Paar voneinander beabstandete und ausziehbare Begrenzungselemente mit einer schwenkbaren Querschiene, die sich vom distalen Ende jeder ausziehbaren Wandaufhängung aus erstreckt. Wenn die ausfahrbaren Wandelemente ausgefahren sind, sind die Querschienen von einer Außenseite des Viehanhängers beabstandet, und wenn die ausfahrbaren Wandelemente eingezogen sind, befindet sich die Querschiene in der Nähe einer aufrechten Wand des Anhängers.

Aus US 20110120384 A1 ist eine mobile Sortieranlage für Vieh bekannt, bestehend aus einer zentralen Rutsche, einem linken Sortierbereich und einem rechten Sortierbereich. Die zentrale Rutsche besteht aus einer hinteren Rutsche, einer vorderen Rutsche, einem linken zentralen Rutschenfeld und einem rechten zentralen Rutschenfeld. Die vordere Rutsche besteht aus einer Abreißkupplung, die wiederum aus einem linken und einem rechten Abreißkupplungsabschnitt besteht. Der linke und der rechte abtrennbare Kupplungsabschnitt werden zusammengeklappt, um die abtrennbare Kupplung zu bilden, die zur Verbindung mit dem Zugfahrzeug verwendet wird.

Aus US 7350480 B1 ist ein temporäres elektrifiziertes Zaunsystem bekannt, das bewegliche, lagerbare Zaunpfosten und flexible, elektrifizierte Bänder verwendet, die innerhalb des Zaunpfostens aufgerollt werden können. Jeder Zaunpfosten umfasst eine interne Stromquelle. Jedes elektrifizierte Band ist mechanisch mit anderen Zaunpfosten verbunden, um die Umzäunung zu bilden. Das System wird vorzugsweise auf einem Anhänger, z. B. einem Pferdeanhänger, gelagert oder abnehmbar befestigt und lässt sich schnell und einfach aufstellen.

Aus US 2009000564 A1 ist ein Gehegesystem mit einem mittels einer in einer Verriegelungsvorrichtung verriegelbaren Kette verschließbarem Tor bekannt. Die Kette wird entlang einer Oberfläche der Verriegelungsvorrichtung geführt, bis sie auf eine weitere Oberfläche trifft. Anschließend gleitet die Kette entlang dieser zweiten Oberfläche bis zu deren Ende. Dort wird die Kette in einen Schlitz der Vorrichtung geführt, wodurch sie sicher arretiert wird. Außerdem wird ein Verfahren zum Verbinden zweier mobiler Gehege beschrieben. Eine tragbare Gehegewand umfasst eine Trägerstruktur sowie eine darin integrierte Tür, die im geschlossenen Zustand bündig mit der Panelstruktur abschließt. Weiterhin wird ein Verfahren zur Steuerung der Bewegung von Nutztieren mit einem zusammenklappbaren, tragbaren Gehegesystem beschrieben, bei dem ein drehbar befestigtes Tor geöffnet wird, um die Tiere hindurchzuführen.

EP 1138196 A2 beschreibt einen Tierunterstand mit einem Stall und einem daran beweglich gekoppelten Zaun, der vor der Vorderwand des Stalls ein Gehege, beispielsweise für ein Kalb, bildet. Der Zaun kann zur Reinigung des Geheges vollständig über das Haus geschwenkt werden. Der Zaun umfasst ein relativ zum Zaun bewegliches Teil, das einen verschließbaren, öffnungsfähigen Abschluss für das Gehege bildet und sich in einer Aussparung befindet, deren Höhe geringer ist als die des übrigen Zauns. Dadurch kann das Gehege leicht gereinigt werden, während der Zaun weiterhin als Ganzes entlang oder über das Haus verschoben oder geschwenkt werden kann. Vorzugsweise bildet das bewegliche Teil nach dem Verschieben oder Schwenken des Zauns einen öffnungsfähigen Verschluss für den Stall, sodass eine Reinigung des Geheges auch bei Anwesenheit eines Kalbes im Stall möglich ist. Das Teil ist vorzugsweise vollständig von der Vorderwand des Zauns abnehmbar. Vor der Vorderwand des Stalls können Rollen angebracht sein, sodass der gesamte Tierunterstand - nach dem Schwenken des Zauns oder Stalls - zum Reinigen des Bodens darunter angehoben und gezogen oder geschoben werden kann.Aufgabe der vorliegenden Erfindung ist es, ein Gehege bereitzustellen, welches eine bedarfsgerechte Haltung von einzelnen Kälbern oder anderen Nutztieren, von Tierpaaren oder kleinen Gruppen erlaubt und gleichzeitig die Möglichkeit bietet, die Tiere bei Bedarf schnell und unkompliziert in sozialen Kontakt mit anderen Tieren, Tierpaaren oder Kleingruppen zu bringen.

Die Aufgabe wird gelöst durch ein Gehege nach Anspruch 5 mit einer erfindungsgemäßen Verbindungswand nach Anspruch 1. Beansprucht wird eine Verbindungswand nach Anspruch 1, ein Gehege mit einer erfindungsgemäßen Verbindungswand nach Anspruch 5, ein System bestehend aus mehreren erfindungsgemäßen Gehegen nach Anspruch 11 und ein Verfahren zur Nachrüstung von Gehegen mit einer erfindungsgemäßen Verbindungswand nach Anspruch 12. Vorteilhafte Ausgestaltungen sind in den Unteransprüchen angegeben.

Erfindungsgemäß ist ein Gehege zur Abgrenzung eines Laufbereichs für Nutztiere mit einer Vorderwand, zwei einander gegenüberliegenden Seitenwänden und einer rückwärtigen Öffnung zur Anordnung an einer aus dem Laufbereich zugänglichen Behausung, wobei mindestens eine der Seitenwände als eine erfindungsgemäße Verbindungswand ausgebildet ist, wobei die Verbindungswand einen Durchgang und ein bewegliches Wandelement aufweist, wobei in einer Geschlossenstellung des Wandelements der Durchgang von dem Wandelement verschlossen ist und in einer den Durchgang freigebenden Offenstellung des Wandelements ein Befestigungsbereich des beweglichen Wandelements an der Verbindungswand oder an einem an Verbindungswand angrenzenden Wandsegment des Geheges befestigt ist und ein Kopplungsbereich des beweglichen Wandelements nach außen weist und zur Kopplung mit einer gleichartigen, in einem Abstand zum Gehege angeordneten Verbindungswand eines weiteren Geheges ausgebildet ist.

Mit Hilfe der beweglichen Wandelemente zweier im Abstand zueinander platzierter Gehege lassen sich die Laufbereiche der beiden Gehege durch Ausbildung eines von den Wandelementen begrenzten Verbindungsgangs besonders einfach miteinander verbinden. Die Laufbereiche beider Gehege stehen damit den in zwei separaten Gehegen gehaltenen Tieren gemeinsam zur Verfügung. Gleichzeitig lassen sich die einzelnen Gehege schnell und unkompliziert wieder voneinander trennen.

In den erfindungsgemäßen Gehegen können einzelne Tiere betreut werden. Es ist jedoch ohne Weiteres denkbar, in den Gehegen auch Tierpaare oder Tiere in größeren Gruppenstärken zu betreuen. Die Größe der Gehege ist unter anderem nach Anzahl und/oder Art der in einem Gehege betreuten Tiere auszuwählen. Bei einer Verbindung mehrerer Gehege können jeweils einzeln betreute Tiere oder Gruppen von Tieren bzw. einzelne Tiere mit Gruppen zusammengebracht werden. Es ist also auch daran gedacht, Gehege unterschiedlicher Größe und/oder Gehege mit unterschiedlicher Anzahl darin betreuter Tiere miteinander zu verbinden, um einen sozialen Kontakt zwischen den Tieren zu befördern.

Üblicherweise werden auf Betriebshöfen mit Rinderhaltung je nach Anzahl der zu betreuenden Jungtiere mehrere Gehege im Abstand zueinander platziert. Insbesondere mobile Gehege können schnell und einfach auf- und abgebaut werden. Für die Säuberung einzelner Gehege und auch für Wartungszwecke ist es vorteilhaft, die Gehege in einem so großen Abstand zueinander zu platzieren, dass die Gehege von allen Seiten einfach und schnell zu erreichen sind und unabhängig von den Nachbargehegen bearbeitet werden können. Die erfindungsgemäße Lösung ermöglicht es, die Gehege nach bewährter Methode im Abstand zueinander zu platzieren und dennoch die Möglichkeit zu haben, die Laufbereiche nebeneinander platzierter Gehege durch wenige Handgriffe miteinander zu verbinden.

Das bewegliche Wandelement verschließt den Durchgang der Verbindungswand in einer Geschlossenstellung, so dass die sich in dem Gehege aufhaltenden Tiere nur in dessen Laufbereich aufhalten können. In einer Offenstellung des Wandelementes ist der Durchgang des Verbindungselementes geöffnet, so dass die Tiere durch den Durchgang hindurch aus dem Laufbereich ihres Geheges heraustreten können.

Das bewegliche Wandelement ist derart ausgestaltet, dass ein Verbindungsgang zwischen zwei nebeneinander platzierten Gehegen gebildet werden kann. In der Offenstellung ragt das Wandelement nach außen in den Zwischenraum zwischen den Gehegen. Wird ein zweites bewegliches Wandelement des im Abstand platzierten Geheges in die Offenstellung gebracht, so ragt auch dieses in den Zwischenraum zwischen die Gehege. Die jeweils nach außen ragenden Seiten der Wandelemente werden derart mit der jeweils gegenüberliegenden Verbindungswand verbunden, dass ein zu beiden Seiten der Durchgänge der Verbindungswände begrenzter Verbindungsgang entsteht, den die Tiere für das Betreten beider Laufbereiche der zwei nebeneinander platzierten Gehege nutzen können.

Es ist daran gedacht, dass die Vorderwand üblicherweise an gattungsgemäßen Gehegen, also insbesondere an Kälberboxen, vorhandene Ausstattungsmerkmale aufweisen kann. Beispielweise kann die Vorderwand ein Fressgitter aufweisen, durch welches die Tiere den Kopf hindurch strecken können. Es können Behälteraufnahmen an der Vorderwand, insbesondere außen an der Vorderwand, vorgesehen sein, beispielsweise um Behälter für Tränke- und Futtermittel aufzunehmen.

Vorderwand und Seitenwände können jeweils als einzelne, zusammenhängende Wandsegmente ausgebildet sein, die unmittelbar miteinander verbindbar sind, beispielsweise mittels Schraub- und/oder Steckverbindungen. Denkbar ist ohne Weiteres auch eine mittelbare Verbindung der Wandsegmente untereinander mittels Pfosten oder dergleichen. Die Wandsegmente können jeweils alternativ aus mehreren Elementen zusammengesetzt sein, die mittelbar oder unmittelbar miteinander verbindbar sind.

Üblich ist eine etwa senkrechte Anordnung der Vorderwand zu den Seitenwänden, sodass ein etwa rechteckiger Laufbereich begrenzt wird. Eine davon abweichende Anordnung, insbesondere eine winklige Anordnung, der Wandsegmente zueinander ist natürlich ebenfalls denkbar.

Grundsätzlich ist daran gedacht, dass die Vorderwand und die Seitenwände jeweils in einer Ebene verlaufen. Die Wandsegmente können jedoch auch jeweils gekrümmt oder, insbesondere bei einer mehrteiligen Ausgestaltung, in sich winklig ausgebildet sein. Zwischen der Vorderwand und den Seitenwänden können beispielsweise je nach Größe und Ausgestaltung des Geheges weitere Wandsegmente angeordnet sein. Diese weiteren Wandsegmente können beispielsweise weitere Funktionselemente wie eine Eingangstür oder dergleichen ausbilden oder aufweisen.

Gegenüberliegend zur Vorderwand weist das Gehege eine rückwärtige Öffnung auf, die zur Verbindung mit einer Behausung dient. Die Behausung kann, wie bei gattungsgemäßen Kälberboxen üblich, eine mobile Hütte sein.

In einer ersten Variante ist daran gedacht, dass die Behausung unmittelbar mit den Seitenwänden verbindbar ist. Denkbar ist allerdings auch eine mittelbare Verbindung unter Verwendung von Pfosten und/oder weiteren Wandsegmenten, die Lücken zwischen der Behausung und den Seitenwänden schließen.

In einer bevorzugten Ausgestaltung ist daran gedacht, dass die Verbindungswand eine Verschlusseinrichtung aufweist, mittels der das bewegliche Wandelement in der Geschlossenstellung gegen ein unerwünschtes Öffnen des Durchgangs durch ein sich im Gehege aufhaltendes Nutztier sicherbar ist.

Wenn sich ein Tier im Gehege bewegt und gegen die Verbindungswand stößt oder sich an der Verbindungswand reibt, kann die Verschlussvorrichtung verhindern, dass sich der Durchgang der Verbindungswand unbeabsichtigt öffnet.

Die erfindungsgemäße Verbindungswand weist eine Kopplungseinrichtung auf, die derart ausgebildet ist, dass ein komplementär ausgebildetes Wandelement einer Verbindungswand eines im Abstand zum Gehege platzierten weiteren Geheges zur Herstellung eines Verbindungsgangs zwischen den Laufbereichen der zwei Gehege mit der Verbindungswand koppelbar ist.

Für eine stabile Verbindung zwischen der äußeren Seite eines beweglichen Wandelementes und der Verbindungswand eines im Abstand platzierten, weiteren Geheges kann die Kopplungseinrichtung so ausgestaltet sein, dass auch ein gelegentliches Reiben oder Stoßen des Tieres an den Verbindungsstellen zwischen dem beweglichen Wandelement und der Verbindungswand nicht dazu führt, dass sich die Befestigung zwischen dem beweglichen Wandelement und der Verbindungswand löst.

Die Kopplungseinrichtung ist zweiteilig ausgebildet, wobei ein erstes Kopplungselement zur Herstellung einer kraft- und/oder formschlüssigen Verbindung mit einem zweiten Kopplungselement koppelbar ist. In einer denkbaren Ausgestaltung weist das erste Kopplungselement beispielsweise einen Sicherungsstift auf, der in eine komplementär ausgebildete Stiftaufnahme bringbar ist. Der Sicherungsstift kann mit einem zusätzlichen Sicherungselement wie zum Beispiel einem Bügel oder einem Sicherungssplint an der Stiftaufnahme oder auch aufgrund von Schwerkraft in der Stiftaufnahme gesichert sein. Es versteht sich, dass der Sicherungsstift nicht auf eine stiftförmige Ausgestaltung beschränkt ist. Beispielsweise könnte auch eine stegförmige Ausgestaltung des Sicherungsstiftes oder dergleichen vorgesehen sein. Verschiedene mechanische Verbindungselemente, die bei derartigen Kopplungseinrichtungen Verwendung finden können, stehen als Alternativen zur Verfügung, beispielsweise Rast- oder Schnappverbindungen, Gurtbänder, Kabelbinder oder ähnliches. Ebenfalls verwendbar sind formschlüssige Kopplungseinrichtungen, die ein Einstecken, Einhängen oder Einsetzen des beweglichen Wandelements in entsprechende Aufnahmen ermöglichen.

Bei dieser Ausgestaltung mit zwei Kopplungselementen ist ein erstes Kopplungselement an einer Seite des beweglichen Wandelementes angeordnet ist und ein zweiten Kopplungselement an der Verbindungswand, insbesondere im Bereich des Öffnungsrandes des Durchgangs der Verbindungswand. Es ist grundsätzlich möglich, dass die Aufnahme entweder an dem beweglichen Wandelement oder an der Verbindungswand angeordnet ist. Bevorzugt ist daran gedacht, dass bei einer solchen Ausgestaltung die Aufnahme an der Verbindungswand, insbesondere im Bereich des Öffnungsrandes des Durchgangs der Verbindungswand, angeordnet ist.

In einer besonders vorteilhaften Ausgestaltung ist daran gedacht, dass die Kopplungseinrichtung vollständig oder teilweise mittels der Verschlusseinrichtung ausgebildet ist.

Für eine vollständige Ausbildung der Kopplungseinrichtung mittels der Verschlusseinrichtung ist beispielsweise daran gedacht, dass die Kopplungseinrichtung zweiteilig ausgestaltet ist, wie zuvor beschrieben. In einer Geschlossenstellung kann ein Sicherungsstift an dem beweglichen Wandelement in eine komplementäre Aufnahme der Verbindungswand geführt sein, um das bewegliche Wandelement an der Verbindungwand zu sichern. Das gleiche Kopplungselement, in diesem Fall der Sicherungsstift des beweglichen Wandelementes, kann in der Offenstellung dazu dienen, das bewegliche Wandelement mit der Verbindungswand eines im Abstand platzierten Geheges zu koppeln.

Bei einer teilweisen Ausbildung der Kopplungseinrichtung mittels der Verschlusseinrichtung kann beispielsweise vorgesehen sein, dass bei einer wie zuvor beschriebenen zweiteiligen Ausgestaltung mit zwei Kopplungselementen in der Geschlossenstellung des beweglichen Wandelementes ein Sicherungsstift an dem beweglichen Wandelement in eine Verschlussaufnahme der Verbindungswand greift. In der Offenstellung könnte der Sicherungsstift jedoch in eine von der Verschlussaufnahme verschiedene Koppelaufnahme der im Abstand angeordneten weiteren Verbindungswand greifen. In diesem Fall ist ein als Sicherungsstift ausgebildetes gemeinsames Verschluss- und Koppelelement vorgesehen und separate Verschluss- bzw. Koppelaufnahmen.

Wie bereits erwähnt, können die Koppel- und Verschlusselemente an der Seite des Wandelementes oder an der Verbindungswand ausgetauscht angeordnet sein. Ebenfalls wie zuvor beschrieben können unterschiedliche Formen und Mimiken solcher mechanischen Verbindungen vorgesehen sein.

Gemäß einer bevorzugten Ausgestaltung ist daran gedacht, dass das bewegliche Wandelement als eine schwenkbar an der Verbindungswand gelagerte einflüglige oder zweiflüglige Tür ausgebildet ist. In einer anderen Ausgestaltung kann das bewegliche Wandelement beispielsweise auch als Steckelement ausgebildet sein.

Besonders vorteilhaft ist eine Ausgestaltung derart, dass das bewegliche Wandelement bezüglich des Laufbereiches sowohl nach innen als auch nach außen schwenkbar ist und/oder derart, dass das bewegliche Wandelement wahlweise an einem rechten oder linken Öffnungsrand des Durchgangs der Verbindungswand anschlagbar ist.

Diese Ausgestaltungen machen es möglich, dass eine einzige Ausführung einer Verbindungswand auf beiden Seiten des Geheges verwendet werden kann. Der Aufwand für Herstellung und Logistik kann dadurch reduziert werden.

Wenn die Durchgangsöffnung mittig an der Verbindungswand angeordnet ist, genügt es bei einer fluchtenden Ausrichtung der Gehege, wenn das als Tür ausgebildete bewegliche Wandelement sowohl nach außen als auch nach innen schwenkbar ist. An einem im Abstand platzierten Gehege muss die Verbindungswand nur umgedreht eingebaut werden, damit die beiden beweglichen Wandelemente der zwei Gehege in der Offenstellung so zueinander ausgerichtet sind, dass ein zu beiden Seiten der Durchgangsöffnungen der Verbindungswände begrenzter Verbindungsgang zwischen den Gehegen entsteht.

Wenn die Durchgangsöffnung außermittig an der Verbindungswand angeordnet ist, kann neben der Schwenkbarkeit in beide Richtungen eine unterschiedliche Anschlagbarkeit des als Tür ausgebildeten beweglichen Wandelementes vorgesehen sein, um eine einzige Ausführungsvariante des Verbindungselementes auf beiden Seiten des Geheges zu verwenden. Das als Tür ausgebildete, bewegliche Wandelement einer gegenüberliegenden Verbindungswand müsste nur auf der anderen Seite der Durchgangsöffnung angelenkt werden, um die Wandelemente bei fluchtender Ausrichtung der im Abstand platzierten Gehege in die geeignete Offenstellung für einen beidseitig begrenzten Verbindungsgang zu bringen.

In einer ersten Ausgestaltungsvariante der erfindungsgemäßen Verbindungswand ist daran gedacht, dass der Durchgang enger ist, als die Breite der Verbindungswand. Somit entsteht ein zumindest auf einer Seite durch einen Randbereich der Verbindungswand begrenzter Durchgang. Es kann allerdings auch vorgesehen sein, dass der Durchgang die gesamte Breite der Verbindungswand einnimmt. In diesem Fall ist der Durchgang beiderseitig durch Pfosten oder durch angrenzende Wandsegmente des Geheges begrenzt. Bei einer Durchgangsbreite, die der vollen Breite der Verbindungswand entspricht ist allerdings zu bedenken, dass die insgesamt benötigte Stellfläche für das Gehegesystem mehr Platz beansprucht.

Der Durchgang kann von einem einteilig oder mehrteilig ausgebildeten beweglichen Wandelement verschließbar bzw. freigebbar sein. Wie beschrieben, kann das bewegliche Wandelement beispielsweise mittels eines einzelnen Steckelements oder mittels mehrerer Steckelemente ausgebildet sein, die zum Beispiel miteinander gekoppelt werden können.

Wie erwähnt, ist bei dem erfindungsgemäßen Gehege daran gedacht, dass sich der Durchgang über die gesamte Breite der Verbindungswand erstrecken kann. Dabei wird die Verbindungswand im Wesentlichen oder vollständig von dem beweglichen Wandelement selbst ausgebildet. In dieser Ausgestaltung kann vorgesehen sein, dass die Verbindungswand, zum Beispiel ausgebildet als ein- oder zweiflügelige Tür, ein oder zwei bewegliche Wandelemente aufweist, wobei in einer Geschlossenstellung des Wandelements bzw. der Wandelemente die Verbindungswand geschlossen ist und in einer die Verbindungswand öffnenden Offenstellung des Wandelements ein Befestigungsbereich beweglicher Wandelemente an der Verbindungswand oder an einem an eine Verbindungswand angrenzenden Wandsegment des Geheges befestigt ist und ein Kopplungsbereich des beweglichen Wandelements nach außen weist und zur Kopplung mit einer gleichartigen, in einem Abstand zum Gehege angeordneten Verbindungswand eines weiteren Geheges ausgebildet ist.

Bei einer Ausgestaltung des beweglichen Wandelementes als zweiflüglige Tür kann vorgesehen sein, dass die als Verbindungswand ausgebildete Seitenwand in der Mitte teilbar ist. Die zwei Teile der Verbindungswand bilden die zwei Flügel der Verbindungswand. Zwei gleichartige gegenüberliegende Verbindungswände zweier im Abstand zueinander angeordneter Gehege können dann so geöffnet werden, dass die Flügel paarweise aneinanderschlagen und in ihren Kopplungsbereichen miteinander gekoppelt werden, wodurch sich ein die Laufbereiche der Gehege verbindender Durchgang ergibt. In dieser besonders einfach herzustellenden Variante des erfindungsgemäßen Geheges wird die Verbindungswand also vollständig oder zumindest im Wesentlichen durch das bewegliche Wandelement ausgebildet.

Bei einer mittigen Anordnung des Durchgangs oder bei einer Durchgangsbreite die der Verbindungswandbreite entspricht und einer zweiflügligen Ausbildung des beweglichen Wandelements, lassen sich im Abstand zueinander platzierte Gehege besonders einfach miteinander verbinden. Eine so ausgestaltete erfindungsgemäße Verbindungswand kann, insbesondere wenn die Flügel des Wandelementes in der Art einer Pendeltür nach innen und nach außen geöffnet werden können, auch ohne Weiteres auf beiden Seiten des Geheges verwendet werden. Bei fluchtender Anordnung im Abstand zueinander platzierter Gehege können die Flügel der gegenüberliegenden Verbindungswände in ihren Kopplungsbereichen leicht zusammengeführt und miteinander gekoppelt werden. Diese besonders vorteilhafte Ausführung erlaubt die einfache Herstellung eines Gehegesystems mit zwei und mehr miteinander verbundenen Gehegen.

Der Durchgang der erfindungsgemäßen Verbindungswand ist in horizontaler Richtung an zwei gegenüberliegenden Seiten begrenzt ist von einem Randbereich der Verbindungswand oder von einem Randbereich eines an die Verbindungswand angrenzenden Wandsegments des Geheges und in vertikaler Richtung unten und/oder oben begrenzt ist von einem an der Verbindungswand oder an einem Randbereich eines an die Verbindungswand angrenzenden Wandsegments des Geheges befestigten Versteifungselements.

Je nach Größe und Anordnung des Durchgangs kann vorgesehen sein, dass der Durchgang in horizontaler Richtung einerseits oder beiderseits von einem Randbereich der Verbindungswand bzw. von Pfosten oder von Randbereichen angrenzender Wandsegmente des Geheges begrenzt ist. Wenn der Durchgang beispielsweise enger ist als die Gesamtbreite der Verbindungswand, kann der Durchgang rechts und links jeweils von Randbereichen der Verbindungswand begrenzt sein. Ist der Durchgang ganz rechts oder ganz links an der Verbindungswand angeordnet, kann der Durchgang einerseits von einem Randbereich der Verbindungswand und andererseits von einem Pfosten der Verbindungswand oder von einem Randbereich eines angrenzenden Wandsegments des Geheges begrenzt sein. Wenn der Durchgang die gesamte Breite der Verbindungswand einnimmt, kann der Durchgang rechts und links von Posten und/oder von Randbereichen angrenzender Wandsegmente des Geheges begrenzt sein.

Mit unten und/oder oben des Durchgangs angeordneten Versteifungselementen wird die Stabilität der Verbindungswand insbesondere in der Offenstellung des beweglichen Wandelements erhöht. Grundsätzlich denkbar ist auch, auf die Verwendung von oben oder unten am Durchgang angeordneten Versteifungselementen zu verzichten, so dass die Verbindungswand in der Offenstellung des beweglichen Wandelementes in zwei nicht miteinander verbundene Teile separiert ist. In einer solchen Variante sollten allerdings weitere Verankerungen der Teilelemente am Boden des Aufstellortes vorgesehen sein und/oder sehr starke Verstrebungen der Verbindungswand mit der Vorderwand bzw. mit einer im rückwärtigen Bereich angeordneten Behausung, um die nötige Stabilität der Gehegewand zu gewährleisten.

Ein den Durchgang oben begrenzendes Versteifungselement kann vorzugsweise als Bogen oder in einem U-förmigen Profil ausgeführt sein, um die Durchgangshöhe für die Tiere zu erhöhen bzw. um den Durchgang für Menschen zu erleichtern.

Weiter bevorzugt ist eine Ausgestaltung, wonach die zwei einander gegenüberliegenden Seitenwände des Geheges jeweils als Verbindungswand mit jeweils einem Durchgang und jeweils einem beweglichen Wandelement in erfindungsgemäßer Ausführung ausgebildet sind.

In dieser Ausgestaltung ist eine selektive Verbindung des Geheges mit weiteren Gehegen möglich, die zu beiden Seiten des Geheges im Abstand angeordnet sind. Damit ist in einfacher und unkomplizierter Weise ein Gehegesystem mit mehr als zwei miteinander verbundener Gehege herstellbar.

Für eine einfache Art der Ortsveränderung des Geheges ist in einer Ausgestaltung daran gedacht, dass das Gehege ein für den rollenden Transport des Geheges oder für den rollenden Transport von Teilen des Geheges ausgebildetes Fahrwerk aufweist, wobei das Fahrwerk vorzugsweise zwei Transporträder umfasst, die jeweils an den gegenüberliegenden Seitenwänden des Geheges angeordnet sind.

Das Transportrad kann derart ausgestaltet und angeordnet sein, dass es sowohl für den rollenden Transport des Geheges bzw. von Teilen davon geeignet ist als auch zur Abstützung der Seitenwand bzw. der Verbindungswand auf dem Boden am Aufstellort des Geheges.

In einer weiteren Ausgestaltung des erfindungsgemäßen Geheges ist daran gedacht, dass die Vorderwand eine Eingangstür aufweist zur Herstellung eines Zugangs in den Laufbereich.

Vorzugsweise ist in der Eingangstür ein Fressgitter ausgebildet durch das die Tiere den Kopf hindurch strecken können.

Für den Schutz der sich in dem Gehege gehaltenen Tiere gegen Umwelteinflüsse wie Sonneneinstrahlung, Wind oder Temperatur kann vorgesehen sein, dass das Gehege eine aus dem Laufbereich zugängliche, mit der rückwärtigen Öffnung des Geheges verbundene Behausung für Nutztiere umfasst. Die Tiere können sich somit bei Bedarf aus dem Laufbereich in den Schutz einer geeigneten Behausung zurückziehen.

Für einen umfassenden Schutz der Tiere ist daran gedacht, dass die Behausung ein Dach und eine Behausungswand aufweist. In einer Ausgestaltung kann vorgesehen sein, dass das Dach und die Behausungswand integral ausgebildet sind. Beispielsweise kann die Behausung als zusammenhängendes Formteil hergestellt sein, beispielweise mittels Formgussverfahrens, mittels Laminierens von Faser- und Stabilisierungsmatten, oder dergleichen.

Für ein mobiles Gehege wird eine kompakte, mit einfachen Mitteln zu bewegende Behausung bevorzugt eingesetzt. Solche kompakten Behausungen lassen sich üblicherweise von einer Person und ohne den Einsatz von zusätzlichen Hebezeugen wie Rad- bzw. Hofladern bewegen und hantieren. Bei der Betreuung von Tieren in größeren Gruppenstärken, zum Beispiel in Gruppenstärken von bis zu oder von mehr als 14 Tieren, hat sich die Verwendung einer Behausung in Igluform als vorteilhaft gezeigt. Behausungen in Igluform, die mit den üblicherweise auf einem Wirtschaftshof verfügbaren Hebezeugen wie Rad- bzw. Hofladern bewegbar sind, haben in Bodennähe einen etwa kreisrunden Innendurchmesser von ca. 4,5 Metern. In Behausungen dieser Größe finden Tiere in Gruppenstärken bis zu 14 oder 15 Tieren Platz. Die gemeinsam diese Behausung nutzenden Tiere können sich im Innenraum eines Iglus gut verteilen und bewegen. Eckbereiche, die die freie Bewegung einschränken, bzw. den zur Verfügung stehenden Platz in der Behausung schwer erreichbar machen können, können bei Verwendung einer Igluform mit einem etwa runden Grundriss vermieden werden.

Es kann vorgesehen sein, dass die Behausung neben einer mit dem Laufbereich verbundenen Eingangsöffnung auch eine weitere Öffnung, insbesondere eine verschließbare Öffnung, aufweist durch die hindurch die Behausung von außerhalb des Geheges zugänglich ist, beispielsweise um Heu, Stroh oder dergleichen einzubringen. Es können darüber hinaus Lüftungsöffnungen in der Behausung, insbesondere im Dach, vorgesehen sein. Solche Öffnungen dienen zur optimalen Versorgung mit Frischluft bzw. für eine Luftzirkulation und bieten die Möglichkeit der Temperaturregulierung.

Dach und Behausungswand können natürlich auch getrennt voneinander ausgestaltet sein.

Erfindungsgemäß ist auch eine Verbindungswand für Gehege zuvor beschriebener Ausgestaltungen, mit einem Durchgang und einem beweglichen Wandelement, wobei in einer Geschlossenstellung des Wandelements der Durchgang von dem Wandelement verschlossen ist und in einer den Durchgang freigebenden Offenstellung des Wandelements ein Befestigungsbereich des beweglichen Wandelements an der Verbindungswand oder an einem an die Verbindungswand angrenzenden Wandsegment des Geheges befestigt ist und ein Kopplungsbereich des beweglichen Wandelements nach außen weist und zur Kopplung mit einer gleichartigen, in einem Abstand zur Verbindungswand angeordneten weiteren Verbindungswand ausgebildet ist.

Mögliche Ausgestaltungen und Vorteile der erfindungsgemäßen Verbindungswand ergeben sich aus den die Verbindungswand betreffenden obigen Erläuterungen zum erfindungsgemäßen Gehege.

Erfindungsgemäß ist außerdem ein System bestehend aus mindestens zwei im Abstand zueinander platzierten Gehegen erfindungsgemäßer Ausgestaltungen, wobei die Verbindungswände der Gehege derart zueinander ausgerichtet sind, dass mittels der beweglichen Wandelemente ein Verbindungsgang zwischen den Laufbereichen der Gehege herstellbar ist.

Wie bereits zum erfindungsgemäßen Gehege erläutert, kann mittels zweier sich in den Zwischenraum zwischen den im Abstand platzierten Gehegen erstreckenden beweglichen Wandelementen der Verbindungswände ein seitlich der Durchgänge der Verbindungswände begrenzter Verbindungsgang hergestellt werden, um die Laufbereiche der beiden Gehege miteinander zu verbinden.

Das erfindungsgemäße Gehege ermöglicht ohne Weiteres einen Zusammenschluss von Laufbereichen gleich mehrerer Gehege. Ein erfindungsgemäßes Stallsystem kann insofern aus einer Vielzahl erfindungsgemäßer Gehege bestehen.

Erfindungsgemäß ist schließlich ein Verfahren zur Nachrüstung eines mit Seitenwänden zur Begrenzung eines Laufbereiches ausgestatteten Geheges für Nutztiere mit einer Verbindungswand erfindungsgemäßer Ausgestaltung, wobei in einem ersten Schritt eine Seitenwand oder ein Teil einer Seitenwand des Geheges entfernt wird und in einem zweiten Schritt die mit der Entfernung der Seitenwand oder des Teils der Seitenwand entstandene Lücke unter Verwendung der Verbindungswand wieder geschlossen wird.

Die Erfindung wird nachfolgend anhand von in Zeichnungen dargestellten Ausführungsbeispielen näher erläutert. Es zeigen
- Fig. 1a: eine schematische Darstellung eines erfindungsgemäßen Geheges in einer ersten Variante,
- Fig. 1b: eine schematische Darstellung eines erfindungsgemäßen Geheges in einer zweiten Variante,
- Fig. 2: eine isometrische Darstellung eines Gehegesystems mit zwei erfindungsgemäßen Gehegen
- Fig. 3a-b: eine schematische Darstellung eines Gehegesystems mit zwei erfindungsgemäßen Gehegen einer ersten Variante mit getrennten und verbundenen Laufbereichen,
- Fig. 4: eine schematische Darstellung eines Gehegesystems mit fünf erfindungsgemäßen Gehegen mit verbundenen Laufbereichen, und
- Fig. 5a-b: eine schematische Darstellung eines Gehegesystems mit zwei erfindungsgemäßen Gehegen einer zweiten Variante mit getrennten und verbundenen Laufbereichen.
- Fig. 6a-c: Schritte eines erfindungsgemäßen Verfahrens zur Nachrüstung eines Geheges mit einer erfindungsgemäßen Verbindungswand.

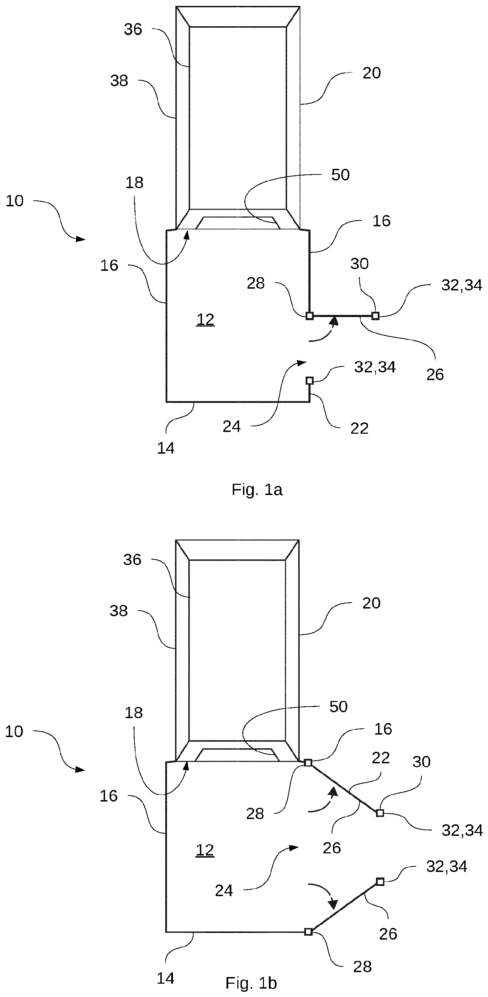

Die Figuren 1a und 1b zeigen jeweils schematisch ein erfindungsgemäßes Gehege 10 in einer Draufsicht von oben. Der Laufbereich 12 des Geheges 10 ist an der Vorderseite von einer Vorderwand 14 und seitlich von zwei Seitenwänden 16 begrenzt. Rückwärtig, der Vorderwand 14 gegenüberliegend, ist eine Öffnung 18 vorgesehen, die in den vorliegenden Beispielen mit einer Behausung 20 verbunden ist. Die Behausung 20 hat einen Eingang 50 durch den sie aus dem Laufbereich 12 zugänglich ist.

Die in der Zeichnungsebene rechte Seitenwand 16 des Geheges 10 ist jeweils als Verbindungswand 22 ausgebildet, mit einem Durchgang 24 und einem vorliegend in der Offenstellung gezeigten beweglichen Wandelement 26. Das bewegliche Wandelement 26 ragt bezüglich des Laubereichs 12 nach außen. Ein Befestigungsbereich 28 des Wandelementes 26 ist an der Verbindungswand 22 befestigt.

Wie in Figur 1a veranschaulicht, kann der Befestigungsbereich 28 an einem freien Ende eines Vorsprungs der Verbindungswand 22 befestigt sein. Figur 1b zeigt, dass der Befestigungsbereich 28 auch unmittelbar an einem Eckpunkt, wie zum Beispiel an einem Pfosten der als Verbindungswand 22 ausgebildeten Seitenwand 16 befestigt sein kann. Es kann auch vorgesehen sein, dass der Befestigungsbereich 28 an einem an die Verbindungswand 22 angrenzenden Wandsegment des Geheges befestigt ist. Ein Kopplungsbereich 30 des beweglichen Wandelementes 26 steht, bezüglich des Laufbereiches 12 nach außen ragend zur Kopplung an einer Verbindungswand eines weiteren Geheges bereit.

Figur 1a veranschaulicht die Ausführung des beweglichen Wandelementes 26 als einflüglige Tür. Figur 1b zeigt die Ausführung des beweglichen Wandelementes 26 als zweiflüglige Tür. Der Befestigungsbereich 28 einer einflügligen Tür, wie in Figur 1a schematisch gezeigt, ist an einer ersten Seite des Türflügels ausgebildet. Diese erste Seite des Türflügels ist drehgelenkig an einem stationären Teil der Verbindungswand 22 befestigt. Der Befestigungsbereich 28 einer zweiflügligen Tür, wie in Figur 1b schematisch angedeutet, ist jeweils an einer ersten Seite der Türflügel ausgebildet. Diese ersten Seiten der Türflügel sind jeweils drehgelenkig an der Verbindungswand 22 befestigt. Wie Figur 1b veranschaulicht, kann die Verbindungsstelle zwischen Türflügel und Verbindungswand 22 ein Pfosten der Verbindungswand 22 sein. Es ist auch denkbar, insbesondere bei einer Breite des Durchgang 24, die der Breite der Verbindungswand 22 entspricht, wie in Figur 1b angedeutet, oder bei randseitiger Anordnung des Durchgangs 24, dass der Befestigungsbereich 28 des Wandelements 26 an einem angrenzenden Wandsegment des Geheges 10 befestigt ist.

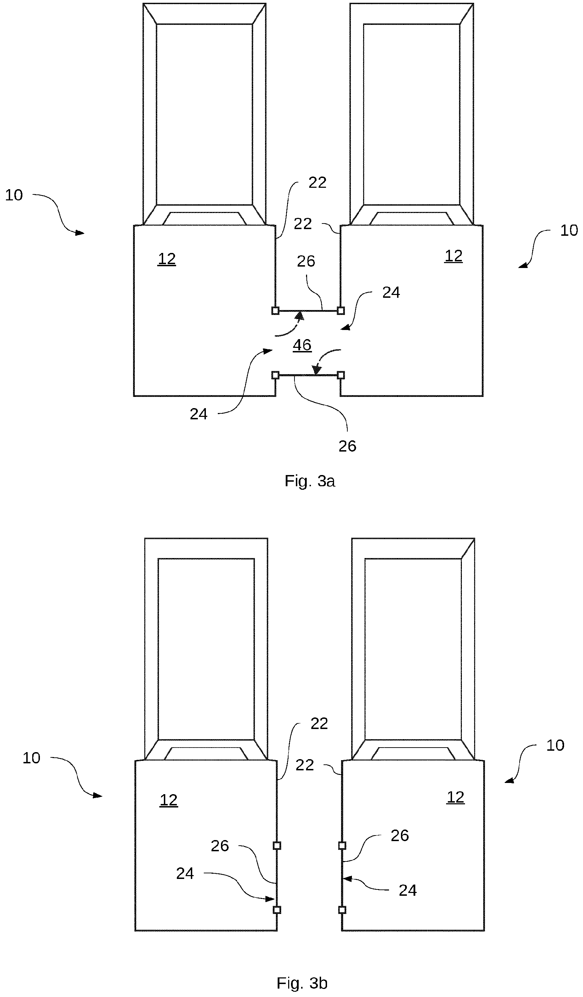

Eine vorliegend zweiteilig ausgebildete Verschlusseinrichtung 32 ist für die Sicherung des Wandelementes 26 an der Verbindungswand 22 vorgesehen. In dem Beispiel nach Figur 1a ist ein erstes Element der Verschlusseinrichtung 32 im Kopplungsbereich 30 des Wandelements 26 angeordnet; ein zweites Element der Verschlusseinrichtung 32 ist an einem stationären Teil der Verbindungswand 22 angeordnet. In der Geschlossenstellung des Wandelements 26, wie beispielsweise in Figur 3b dargestellt, wirkt das erste Element der Verschlusseinrichtung 32 zusammen mit einem an dem stationären Teil der Verbindungswand 22 angeordneten zweiten Element der Verschlusseinrichtung 32, derart dass ein versehentliches Öffnen des Durchgangs 24 verhindert wird.

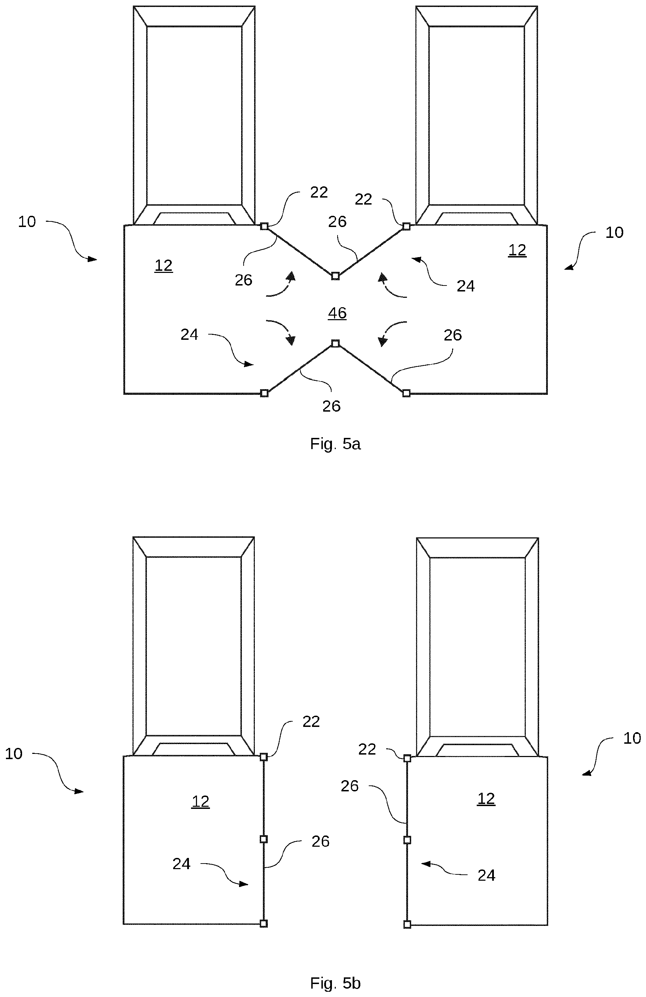

In dem Beispiel nach Figur 1b, in dem das bewegliche Wandelement 26 zweiteilig ausgebildet ist, sind beide Elemente der Verschlusseinrichtung 32 im Kopplungsbereich 30 des Wandelements 26 angeordnet. In der Geschlossenstellung des Wandelements 26, wie beispielsweise in Figur 5b dargestellt, wirkt die beiden Elemente der Verschlusseinrichtung 32 derart zusammen, dass ein versehentliches Öffnen des Durchgangs 24 verhindert wird.

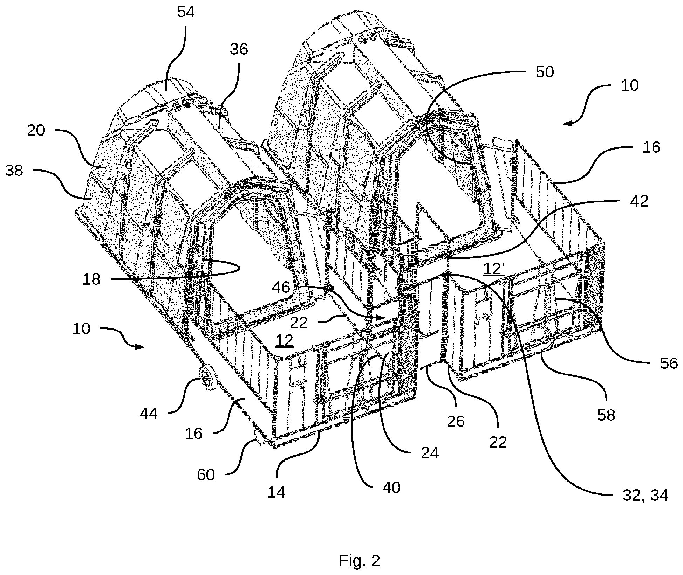

Eine vorliegend ebenfalls zweiteilig ausgebildete Kopplungseinrichtung 34 dient, wie in den Figuren 2, 3a, 4 und 5a angedeutet, zur Kopplung des Wandelements 26 mit einer zweiten Verbindungswand 22 eines weiteren Geheges 10. Dabei kann der Kopplungsbereich 30 des beweglichen Wandelements 26 entweder mit einem stationären Teil einer Verbindungswand 22, einem Pfosten oder einem sonstigen Wandsegment eines zweiten Geheges 10 gekoppelt sein, wie in den Figuren 2 und 3a angedeutet, oder mit einem beweglichen Wandelement 26 der Verbindungswand 22 eines zweiten Geheges 10, wie in Figur 5a angedeutet. Details und bevorzugte Ausgestaltungsmöglichkeiten der Verschlusseinrichtung 32 und der Kopplungseinrichtung 34 können der Beschreibung entnommen werden.

In den Beispielen der Figuren 1a und 1b ist eine Behausung 20 gezeigt, die ein Bestandteil des Geheges 10 sein kann. Wie schematisch angedeutet, hat die Behausung 20 vorzugsweise ein Dach 36 und eine Behausungswand 38.

Figur 2 zeigt eine isometrische Darstellung eines Gehäusesystems umfassend zwei in einem Abstand zueinander platzierte erfindungsgemäße Gehege 10. Wie bereits zu Figuren 1a und 1b beschrieben, ist jeweils der Laufbereich 12 der Gehege 10 von einer Vorderwand 14 und Seitenwänden 16 begrenzt. Rückwärtig kann jeweils eine Behausung 20 mit den Seitenwänden 16 verbunden sein. Wandsegmente 52, die einerseits an der Behausungswand 38 und andererseits an den Seitenwänden 16 befestigt sind, dienen der Lückenfüllung zwischen der Behausung 20 und den Seitenwänden 16. Erläuterungen zu den einzelnen Komponenten der Gehege 10 sind der Beschreibung zu den Figuren 1a und 1b und der Beschreibung zu den Figuren 3a, 3b, 4, 5a und 5b entnehmbar. Aus Gründen der Übersichtlichkeit und zur Vermeidung von Wiederholungen wird in den Figuren auf die Verwendung von Bezugszeichen für bereits beschriebene Komponenten verzichtet, wenn es das Verständnis der Erfindung nicht fördert.

In Figur 2 sind die zwei Laufbereiche 12 der Gehege 10 mittels eines mit den beweglichen Wandelementen 26 der Verbindungswände 22 ausgebildeten Verbindungsgangs 46 miteinander verbunden. Die beweglichen Wandelemente 26 der beiden Verbindungswände 22 befinden sich jeweils in der Offenstellung. Beide Wandelemente 26 ragen nach außen in den zwischen den Gehegen 10 ausgebildeten Abstandsraum und sind mit der jeweils gegenüberliegenden Verbindungswand 22 gekoppelt.

Wie in Figur 2 dargestellt ist, kann der Öffnungsrand des Durchgangs 24 der Verbindungwand 22 in lotrechter Richtung unten mit einem Versteifungselement 40 und oben mit einem Versteifungselement 42 begrenzt sein. Solche Versteifungselemente erhöhen die Stabilität des Geheges 10, insbesondere bei geöffnetem Durchgang 24 der Verbindungswand 22. Das untere Versteifungselement 40 kann, wie dargestellt, als eine gerade Verbindungsstrebe am Boden der Verbindungswand 22 ausgebildet sein. Das obere Versteifungselement 42 kann, wie dargestellt, ein U-förmiges Profil sein, das den Durchgang nach oben hin vergrößert. Wie bereits im allgemeinen Beschreibungsteil erläutert, kann auch vorgesehen sein, nur ein Versteifungselement, beispielsweise das untere Versteifungselement 40, oder gar kein Versteifungselement für eine zusätzliche Stabilisierung zu verwenden.

Die Vorderwand 14 kann, wie im vorliegenden Beispiel gezeigt, ein Fressgitter 56 aufweisen mit einer Öffnung, durch die ein Tier im Laufbereich 12 (nicht dargestellt) seinen Kopf hindurchstrecken kann. Außen an der Vorderwand 14, in unmittelbarer Nähe zu der Öffnung des Fressgitters 56 ist eine Behälteraufnahme 58 angeordnet, die zur Halterung von Futterbehältern ausgebildet ist. Vorliegend ist das Fressgitter 56 und die Behälteraufnahme 58 an einer in der Vorderwand ausgebildeten Eingangstür angeordnet.

Wie in dem Beispiel der Figur 2 weiter dargestellt, kann das Gehege 10 ein Fahrwerk mit Transporträdern 44 aufweisen. Die Transporträder 44 sind im vorliegenden Beispiel jeweils außen, in einem bodenseitigen Abschnitt des hinteren Bereichs der Seitenwände 16 angeordnet. Ein Standfuß 60 jeweils bodenseitig am unteren Rand auf der dem Transportrad 44 gegenüberliegenden Seite der Seitenwände 16 sorgt für einen stabilen und ausgeglichenen Stand des Geheges 10 am Aufstellort.

Wie in Figur 2 weiter gezeigt, kann eine mit der rückwärtigen Öffnung 18 des Geheges 10 verbundene Behausung 20 eine verschließbare Öffnung 54 aufweisen durch die das Innere der Behausung von außerhalb des Geheges 10 erreichbar ist, beispielsweise um Stroh oder Heu einzufüllen oder um einen Blick in das Innere der Behausung zu werfen.

Figur 3a zeigt das Gehegesystem aus Figur 2 in vereinfachter schematischer Ansicht von oben. In dieser Ansicht ist verdeutlicht, wie die beweglichen Wandelemente 26 der Verbindungswände 22 jeweils in ihrer Offenstellung in den Zwischenraum zwischen den in einem Abstand zueinander platzierten Gehegen 10 geschwenkt sind, um dadurch einen Verbindungsgang 46 zwischen den Laufbereichen 12 auszubilden. Die Durchgänge 24 der Verbindungswände 22 sind jeweils geöffnet, sodass Tiere (nicht dargestellt) die Laufbereiche 12 beider Gehege 10 erreichen und nutzen können.

Wie in Figur 3a mit jeweiligen Rotationspfeilen angedeutet, können die beweglichen Wandelemente 26 jeweils, wie bevorzugt, als schwenkbar an den Verbindungswänden 22 gelagerte Klappen bzw. Türen ausgebildet sein. Alternativ können die beweglichen Wandelemente 26 jeweils, wie bereits im allgemeinen Beschreibungsteil erläutert, als vollständig von der Verbindungswand 22 entfernbare Verschlusselemente, zum Beispiel in der Art eines Stecksystems, ausgebildet sein.

In Figur 3b befinden sich die beweglichen Wandelemente 26 jeweils in der Geschlossenstellung. Die Durchgänge 24 der Wandelemente 22 sind jeweils mittels der beweglichen Wandelemente 26 verschlossen. Der zwischen den Gehegen 10 ausgebildete Abstandsraum kann in dieser Betriebsstellung für Betriebspersonal genutzt werden, beispielsweise als Durchgang oder um das Gehege 10 von außen für Wartungsarbeiten oder dergleichen zu erreichen.

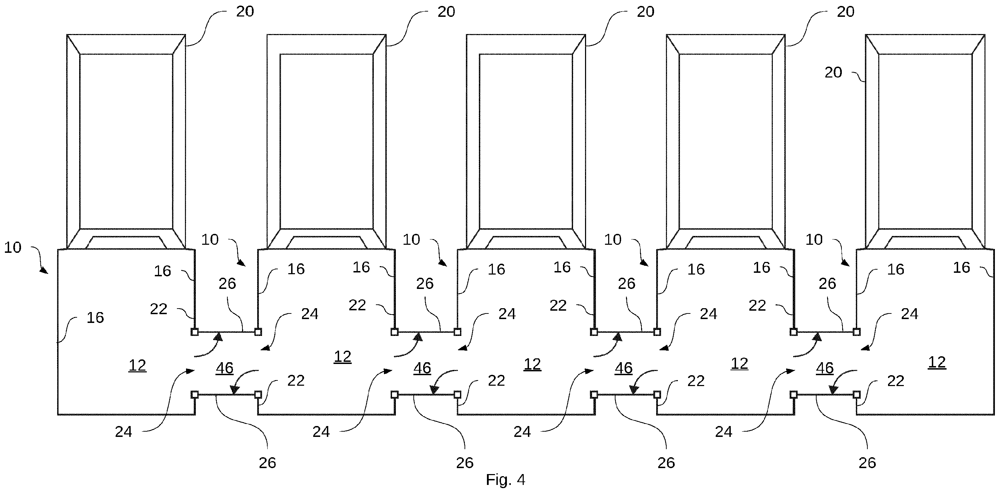

Figur 4 zeigt ein Gehegesystem mit mehr als zwei erfindungsgemäßen Gehegen 10. Vorliegend besteht das Gehegesystem aus fünf Gehegen 10, die mittels Verbindungsgängen 46 miteinander verbunden sind. In der gezeigten Betriebsstellung befinden sich sämtliche bewegliche Wandelemente 26 in der Offenstellung. Die beweglichen Wandelemente 26 mittels denen die Verbindungsgänge 46 begrenzt sind, sind jeweils zu beiden Seiten mit den Verbindungswänden 22 verbunden.

Wie in Figur 4 anschaulich dargestellt, können beide Seitenwände 16 der Gehege 10 als Verbindungswände 22 ausgebildet sein. Im Vorliegenden Beispiel sind die beiden äußeren Gehege 10 auf der in Zeichnungsebene jeweils nach innen weisenden Seite mit einer Verbindungswand 22 ausgestattet und die dazwischen angeordneten Gehege 10 sind beidseitig mit Verbindungswänden 22 ausgestattet.

In dieser gezeigten Betriebsstellung sind sämtliche Laufbereiche 12 der Gehege 10 mittels der Verbindungsgänge 46 miteinander verbunden, sodass Tiere, die sich in den Gehegen 10 aufhalten (nicht dargestellt), sämtliche Laufbereiche 12 der Gehege 10 erreichen und benutzen können.

Figur 5a zeigt ein Gehegesystem bestehend aus zwei Gehegen 10 nach der in Figur 1b gezeigten Variante in schematischer Ansicht von oben. In dieser Ansicht ist verdeutlicht, wie die jeweils als zweiflüglige Tür ausgebildeten beweglichen Wandelemente 26 der Verbindungswände 22 jeweils in ihrer Offenstellung in den Zwischenraum zwischen den in einem Abstand zueinander platzierten Gehegen 10 geschwenkt sind, um dadurch einen Verbindungsgang 46 zwischen den Laufbereichen 12 auszubilden. Die Durchgänge 24 der Verbindungswände 22 sind jeweils geöffnet, sodass Tiere (nicht dargestellt) die Laufbereiche 12 beider Gehege 10 erreichen und nutzen können. Die zwei Flügel der beweglichen Wandelemente 26 sind jeweils in ihren Kopplungsbereichen 30 miteinander gekoppelt.

Wie in Figur 5a mit jeweiligen Rotationspfeilen angedeutet, können die zwei Flügel der beweglichen Wandelemente 26 jeweils, wie bevorzugt, als schwenkbar an den Verbindungswänden 22 bzw. an Pfosten oder an angrenzenden Wandsegmenten gelagerte Klappen bzw. Türen ausgebildet sein. Alternativ können die beweglichen Wandelemente 26 jeweils, wie bereits im allgemeinen Beschreibungsteil erläutert, als vollständig von der Verbindungswand 22 entfernbare Verschlusselemente, zum Beispiel in der Art eines Stecksystems, ausgebildet sein.

In Figur 5b befinden sich die beweglichen Wandelemente 26 jeweils in der Geschlossenstellung. Die Durchgänge 24 der Wandelemente 22 sind jeweils mittels der beweglichen Wandelemente 26 verschlossen. Der zwischen den Gehegen 10 ausgebildete Abstandsraum kann in dieser Betriebsstellung für Betriebspersonal genutzt werden, beispielsweise als Durchgang oder um das Gehege 10 von außen für Wartungsarbeiten oder dergleichen zu erreichen.

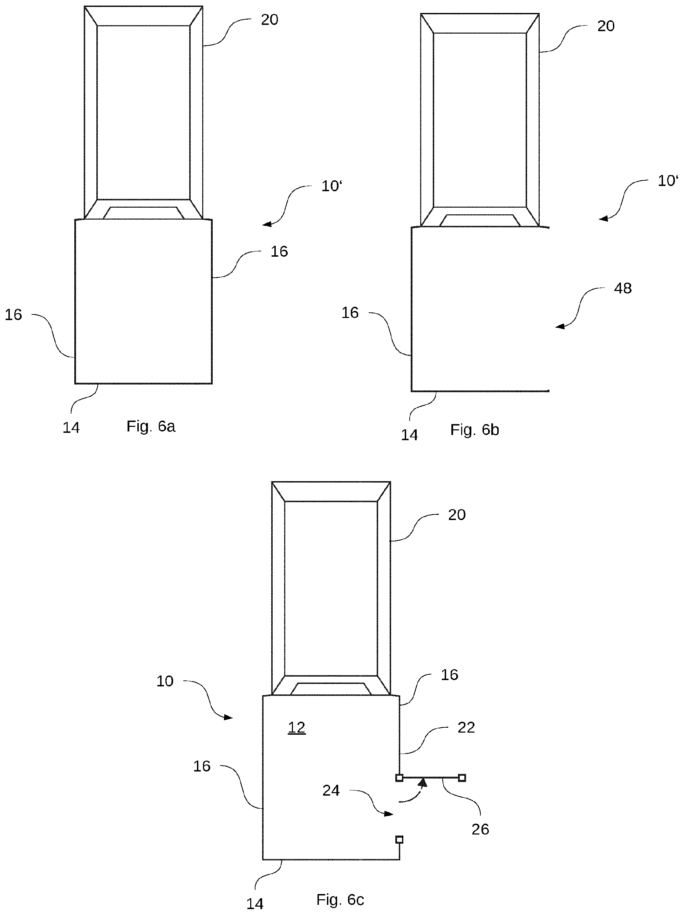

Die Figuren 6a bis 6c veranschaulichen Schritte eines erfindungsgemäßen Verfahrens zum Nachrüsten eines Geheges 10' mit einer erfindungsgemäßen Verbindungswand 22. Vorliegend wird das in Figur 6a gezeigte Gehege 10' nachgerüstet. Wie in Figur 6b dargestellt, wird zunächst eine Seitenwand 16 des Geheges 10' entfernt. Damit entsteht eine Lücke 48 in der Gehegewand. Die Lücke 48 wird, wie in Figur 6c veranschaulicht, mittels einer erfindungsgemäßen Verbindungswand 22 geschlossen. Wie Figur 6c zeigt, kann somit ein erfindungsgemäßes Gehege 10 hergestellt werden.

Die Verbindungswand 22 kann an der Vorderwand 14 form- und/oder kraftschlüssig befestigt werden, beispielsweise mittels Verschraubung und/oder mittels Steckverbindung oder dergleichen. Umfasst das Gehege eine Behausung 20, kann die Verbindungswand 22 mit der Behausung 20 form- und/oder kraftschlüssig verbunden werden. Die Verbindung zwischen den Elementen kann unmittelbar oder unter Verwendung eines weiteren Wandsegments und/oder eines zusätzlichen Zwischenelementes wie einem Pfeiler oder dergleichen erfolgen.

### BEZUGSZEICHENLISTE

- 10, 10': Gehege
- 12: Laufbereich
- 14: Vorderwand
- 16: Seitenwand
- 18: Rückwärtige Öffnung
- 20: Behausung
- 22: Verbindungswand
- 24: Durchgang
- 26: Bewegliches Wandelement
- 28: Befestigungsbereich
- 30: Kopplungsbereich
- 32: Verschlusseinrichtung
- 34: Kopplungseinrichtung
- 36: Dach der Behausung
- 38: Behausungswand
- 40: Versteifungselement
- 42: Versteifungselement
- 44: Transportrad
- 46: Verbindungsgang
- 48: Lücke
- 50: Eingang
- 52: Wandsegment
- 54: Öffnung in der Behausung
- 56: Fressgitter
- 58: Behälteraufnahme
- 60: Standfuß

## Patentansprüche

1. Verbindungswand (22) für ein Gehege (10) mit einem Durchgang (24) und einem beweglichen Wandelement (26),
wobei in einer Geschlossenstellung des Wandelements (26) der Durchgang (24) von dem Wandelement (26) verschlossen ist und in einer den Durchgang (24) freigebenden Offenstellung des Wandelements (26) ein Befestigungsbereich (28) des beweglichen Wandelements (26) an der Verbindungswand (22) oder an einem an die Verbindungswand (22) angrenzenden Wandsegment des Geheges (10) befestigt ist und ein Kopplungsbereich (30) des beweglichen Wandelements (26) nach außen weist und zur Kopplung mit einer gleichartigen, in einem Abstand zur Verbindungswand (22) angeordneten weiteren Verbindungswand (22) ausgebildet und mit dieser koppelbar ist,
wobei der Durchgang (24) der Verbindungswand (22) in horizontaler Richtung an zwei gegenüberliegenden Seiten begrenzt ist von einem Randbereich der Verbindungswand (22),
wobei der Durchgang (24) der Verbindungswand (22) in vertikaler Richtung unten und/oder oben begrenzt ist von einem an der Verbindungswand (22) oder an einem Randbereich eines an die Verbindungswand (22) angrenzenden Wandsegments des Geheges (10) befestigten Versteifungselements (40, 42),
wobei die Verbindungswand (22) eine Kopplungseinrichtung (34) aufweist, die derart ausgebildet ist, dass ein komplementär ausgebildetes Wandelement (26) einer Verbindungswand (22) eines im Abstand zum Gehege (10) platzierten, weiteren Geheges (10) zur Herstellung eines Verbindungsgangs zwischen den Laufbereichen (12) der zwei Gehege (10) mit der Verbindungswand (22) koppelbar ist,
wobei die Kopplungseinrichtung (34) zweiteilig ausgebildet ist und ein erstes Kopplungselement und ein zweites Kopplungselement umfasst, und
wobei das erste Kopplungselement an einer Seite des beweglichen Wandelementes (26) angeordnet ist und das zweite Kopplungselement an der Verbindungswand (22), **dadurch gekennzeichnet, dass**
das erste Kopplungselement zur Herstellung einer kraft- und/oder formschlüssigen Verbindung mit dem zweiten Kopplungselement koppelbar ist.

2. Verbindungswand (22) nach Anspruch 1, **dadurch gekennzeichnet, dass** die Verbindungswand (22) eine Verschlusseinrichtung (32) aufweist, mittels der das bewegliche Wandelement (26) in der Geschlossenstellung gegen ein unerwünschtes Öffnen des Durchgangs (24) durch ein sich im Gehege (10) aufhaltendes Nutztier sicherbar ist.

3. Verbindungswand (22) nach Anspruch 2, **dadurch gekennzeichnet, dass** die Kopplungseinrichtung (34) vollständig oder teilweise mittels der Verschlusseinrichtung (32) ausgebildet ist.

4. Verbindungswand (22) nach einem der vorangegangenen Ansprüche, **dadurch gekennzeichnet, dass** das bewegliche Wandelement (26) als eine schwenkbar an der Verbindungswand (22) gelagerte einflüglige oder zweiflüglige Tür ausgebildet ist.

5. Gehege (10) zur Abgrenzung eines Laufbereichs (12) für Nutztiere mit einer Vorderwand (14), zwei einander gegenüberliegenden Seitenwänden (16) und einer rückwärtigen Öffnung (18) zur Anordnung an einer für die Nutztiere aus dem Laufbereich (12) zugänglichen Behausung (20), **dadurch gekennzeichnet, dass** mindestens eine der Seitenwände (16) als Verbindungswand (22) nach einem der Ansprüche 1 bis 4 ausgebildet ist.

6. Gehege (10) nach Anspruch 5, **dadurch gekennzeichnet, dass** die zwei einander gegenüberliegenden Seitenwände (16) des Geheges (10) jeweils als Verbindungswand (22) mit jeweils einem Durchgang (24) und jeweils einem beweglichen Wandelement (26) gemäß Anspruch 1 ausgebildet sind.

7. Gehege (10) nach einem der Ansprüche 5 oder 6, **dadurch gekennzeichnet, dass** das Gehege (10) ein für den rollenden Transport des Geheges (10) oder für den rollenden Transport von Teilen des Geheges (10) ausgebildetes Fahrwerk aufweist, wobei das Fahrwerk vorzugsweise zwei Transporträder (44) umfasst, die jeweils an den gegenüberliegenden Seitenwänden (16) des Geheges (10) angeordnet sind.

8. Gehege (10) nach einem der vorangegangenen Ansprüche 5 bis 7, **dadurch gekennzeichnet, dass** die Vorderwand (14) eine Eingangstür aufweist zur Herstellung eines Zugangs in den Laufbereich (12).

9. Gehege (10) nach einem der vorangegangenen Ansprüche 5 bis 8, **dadurch gekennzeichnet, dass** das Gehege (10) eine aus dem Laufbereich (12) zugängliche, mit der rückwärtigen Öffnung (18) des Geheges (10) verbundene Behausung (20) für Nutztiere umfasst.

10. Gehege (10) nach Anspruch 10, **dadurch gekennzeichnet, dass** die Behausung (20) ein Dach (36) und eine Behausungswand (38) aufweist.

11. System bestehend aus mindestens zwei im Abstand zueinander platzierten Gehegen (10) nach einem der Ansprüche 5 bis 10, wobei die Verbindungswände (22) der Gehege (10) derart zueinander ausgerichtet sind, dass mittels der beweglichen Wandelemente (26) ein Verbindungsgang (46) zwischen den Laufbereichen (12) der Gehege (10) herstellbar ist.

12. Verfahren zur Nachrüstung eines mit Seitenwänden (16) zur Begrenzung eines Laufbereiches (12) ausgestatteten Geheges (10) für Nutztiere mit einer Verbindungswand (22) nach einem der Ansprüche 1 bis 4, wobei in einem ersten Schritt eine Seitenwand (16) oder ein Teil einer Seitenwand (16) des Geheges (10) entfernt wird und in einem zweiten Schritt die mit der Entfernung der Seitenwand (16) oder des Teils der Seitenwand (16) entstandene Lücke (48) unter Verwendung der Verbindungswand (22) wieder geschlossen wird.

## Claims

1. A connecting wall (22) for an enclosure (10) with a through-passage (24) and a movable wall element (26),
wherein, when the wall element (26) is in a closed position, the through-passage (24) is closed by the wall element (26) and, when the wall element (26) is in an open position that unblocks the through-passage (24), an attachment region (28) of the movable wall element (26) is attached to the connecting wall (22) or to a wall segment of the enclosure (10), said wall segment adjoining the connecting wall (22), and a coupling region (30) of the movable wall element (26) faces outward and is designed to be coupled to a further connecting wall (22) of the same type arranged at a distance from the connecting wall (22) and can be coupled to said further connecting wall,
wherein the through-passage (24) of the connecting wall (22) is delimited in the horizontal direction on two opposing sides by an edge region of the connecting wall (22),
wherein the through-passage (24) of the connecting wall (22) is delimited in the vertical direction at the bottom and/or at the top by a reinforcement element (40, 42) attached to the connecting wall (22) or to an edge region of a wall segment of the enclosure (10), said wall segment adjoining the connecting wall (22),
wherein the connecting wall (22) has a coupling apparatus (34) that is designed such that a complementarily designed wall element (26) of a connecting wall (22) of a further enclosure (10) placed at a distance from the enclosure (10) can be coupled to the connecting wall (22) in order to establish a connecting passage between the walking areas (12) of the two enclosures (10),
wherein the coupling apparatus (34) is designed in two pieces and comprises a first coupling element and a second coupling element,
wherein the first coupling element is arranged on one side of the movable wall element (26) and the second coupling element is arranged on the connecting wall (22), **characterized in that**
the first coupling element can be coupled to the second coupling element in order to establish a force-fit or form-fit connection.

2. The connecting wall (22) according to claim 1, **characterized in that** the connecting wall (22) has a locking apparatus (32), by means of which the movable wall element (26) in the closed position can be secured to prevent the through-passage (24) from being unintentionally opened by livestock located in the enclosure (10).

3. The connecting wall (22) according to claim 2, **characterized in that** the coupling apparatus (34) is formed completely or partially by means of the locking apparatus (32).

4. The connecting wall (22) according to one of the preceding claims, **characterized in that** the movable wall element (26) is designed as a single-leaf or double-leaf door mounted pivotably on the connecting wall (22).

5. An enclosure (10) for limiting a walking area (12) for livestock with a front wall (14), two opposing side walls (16) and a rear opening (18) for arranging a shelter (20) that is accessible for the livestock from the walking area (12), **characterized in that** at least one of the side walls (16) is formed as a connecting wall (22) according to one of claims 1 to 4.

6. The enclosure (10) according to claim 5, **characterized in that** the two opposing side walls (16) of the enclosure (10) are each formed as a connecting wall (22) each having a through-passage (24) and a movable wall element (26) according to claim 1.

7. The enclosure (10) according to one of claims 5 or 6, **characterized in that** the enclosure (10) has a chassis designed for rolling transport of the enclosure (10) or for rolling transport of parts of the enclosure (10), wherein the chassis preferably comprises two transport wheels (44), which are each arranged on the opposing side walls (16) of the enclosure (10).

8. The enclosure (10) according to one of claims 5 to 7, **characterized in that** the front wall (14) has an entrance door for establishing access to the walking area (12).

9. The enclosure (10) according to one of the preceding claims 5 to 8, **characterized in that** the enclosure (10) comprises a shelter (20) for livestock that is accessible from the walking area (12) and is connected to the rear opening (18) of the enclosure (10).

10. The enclosure (10) according to claim 10, **characterized in that** the shelter (20) has a roof (36) and a shelter wall (38).

11. A system consisting of at least two enclosures (10) according to one of claims 5 to 10 placed at a distance from each other, wherein the connecting walls (22) of the enclosures (10) are aligned in relation to each other such that a connecting passage (46) can be established between the walking areas (12) of the enclosures (10) by means of the movable wall elements (26).

12. A method for retrofitting an enclosure (10) equipped with side walls (16) for delimiting a walking area (12) for livestock with a connecting wall (22) according to one of claims 1 to 4, wherein, in a first step, a side wall (16) or a part of a side wall (16) of the enclosure (10) is removed and, in a second step, the gap (48) created by removing the side wall (16) or the part of the side wall (16) is closed again using the connecting wall (22).

## Revendications

1. Paroi de raccordement (22) pour un enclos (10) avec un passage (24) et un élément de paroi mobile (26),
dans laquelle, dans une position fermée de l'élément de paroi (26), le passage (24) est fermé par l' élément de paroi (26) et, dans une position ouverte de l'élément de paroi (26) libérant le passage (24), une région de fixation (28) de l'élément de paroi mobile (26) est fixée à la paroi de raccordement (22) ou à un segment de paroi de l'enclos (10) adjacent à la paroi de raccordement (22), et une région d'accouplement (30) de l'élément de paroi mobile (26) est dirigée vers l'extérieur et conçue pour l'accouplement avec une autre paroi de raccordement (22) similaire disposée à une distance de la paroi de raccordement (22) et peut être accouplée à celle-ci,
dans laquelle le passage (24) de la paroi de raccordement (22) est délimité sur deux côtés opposés dans le sens horizontal par une région de bord de la paroi de raccordement (22),
dans laquelle le passage (24) de la paroi de raccordement (22) est délimité sur le bas et/ou sur le haut dans le sens vertical par un élément de rigidification (40, 42) fixé à la paroi de raccordement (22) ou à une région de bord d'un segment de paroi de l'enclos (10) adjacent à la paroi de raccordement (22),
dans lequel la paroi de raccordement (22) présente un dispositif d'accouplement (34) conçu de telle façon qu'un élément de paroi (26) conçu de façon complémentaire d'une paroi de raccordement (22) d'un autre enclos (10) placé à distance de l'enclos (10) peut être accouplé avec la paroi de raccordement (22) pour la réalisation d'un couloir de raccordement entre les zones de circulation (12) des deux enclos (10),
dans laquelle le dispositif d'accouplement (34) est conçu en deux parties et comporte un premier élément d'accouplement et un deuxième élément d'accouplement, et
dans laquelle le premier élément d'accouplement est disposé sur un côté de l'élément de paroi mobile (26) et le deuxième élément d'accouplement est disposé au niveau de la paroi de raccordement (22), **caractérisée en ce que**
le premier élément d'accouplement peut être accouplé au deuxième élément d'accouplement pour la réalisation d'un raccordement par adhérence et/ou par complémentarité de forme.

2. Paroi de raccordement (22) selon la revendication 1, **caractérisée en ce que** la paroi de raccordement (22) présente un dispositif de fermeture (32), au moyen duquel l'élément de paroi mobile (26) peut être bloqué dans la position fermée contre une ouverture indésirable du passage (24) par un animal d'élevage se trouvant dans l'enclos (10).

3. Paroi de raccordement (22) selon la revendication 2, **caractérisée en ce que** le dispositif d'accouplement (34) est conçu entièrement ou partiellement au moyen du dispositif de fermeture (32).

4. Paroi de raccordement (22) selon l'une des revendications précédentes, **caractérisée en ce que** l'élément de paroi mobile (26) est conçu comme une porte à un battant ou à deux battants montée de façon pivotante sur la paroi de raccordement (22).

5. Enclos (10) destiné à délimiter une zone de circulation (12) pour animaux d'élevage avec une paroi avant (14), deux parois latérales (16) opposées l'une à l'autre et une ouverture arrière (18) destinée à être disposée au niveau d'un logement (20) accessible aux animaux d'élevage depuis la zone de circulation (12), **caractérisé en ce que** l'une au moins des parois latérales (16) est conçue comme une paroi de raccordement (22) selon l'une des revendications 1 à 4.

6. Enclos (10) selon la revendication 5, **caractérisé en ce que** les deux parois latérales (16) opposées l'une à l'autre de l'enclos (10) sont conçues respectivement comme une paroi de raccordement (22) avec un passage (24) respectif et un élément de paroi mobile (26) respectif selon la revendication 1.

7. Enclos (10) selon l'une des revendications 5 ou 6, **caractérisé en ce que** l'enclos (10) présente un châssis conçu pour le transport roulant de l'enclos (10) ou pour le transport roulant de parties de l'enclos (10), dans lequel le châssis comporte de préférence deux roues de transport (44), lesquelles sont disposées respectivement sur les parois latérales (16) opposées de l'enclos (10).

8. Enclos (10) selon l'une des revendications précédentes 5 à 7, **caractérisé en ce que** la paroi avant (14) présente une porte d'entrée pour la réalisation d'un accès à la zone de circulation (12).

9. Enclos (10) selon l'une des revendications précédentes 5 à 8, **caractérisé en ce que** l'enclos (10) comporte un logement (20) pour animaux d'élevage accessible depuis la zone de circulation (12), relié à l'ouverture arrière (18) de l'enclos (10).

10. Enclos (10) selon la revendication 10, **caractérisé en ce que** le logement (20) présente une toiture (36) et une paroi de logement (38).

11. Système constitué d'au moins deux enclos (10) selon l'une des revendications 5 à 10, placés à distance l'un de l'autre, dans lequel les parois de raccordement (22) des enclos (10) sont orientées de telle façon les unes par rapport aux autres, qu'un couloir de raccordement (46) peut être réalisé entre les zones de circulation (12) des enclos (10) au moyen des éléments de paroi mobiles (26).

12. Procédé d'adaptation d'un enclos (10) pour animaux d'élevage équipé de parois latérales (16) destinées à délimiter une zone de circulation (12), avec une paroi de raccordement (22) selon l'une des revendications 1 à 4, dans lequel, dans une première étape, une paroi latérale (16) ou une partie d'une paroi latérale (16) de l'enclos (10) est retirée et, dans une deuxième étape, l'espace (48) formé par le retrait de la paroi latérale (16) ou de la partie de la paroi latérale (16) est refermé à l'aide de la paroi de raccordement (22).
